# EUROPÄISCHE PATENTSCHRIFT

(11) **EP 0 571 408 B1**
(45) Veröffentlichungstag und Bekanntmachung des Hinweises auf die Patenterteilung: **07.12.1994**
(21) Anmeldenummer: 92903346.2
(22) Anmeldetag: 25.01.1992
(51) Int. Cl.: B01D 47/04, B01D 47/02, B01D 47/12, B01D 53/18

(54) **VERFAHREN UND VORRICHTUNG ZUM REINIGEN VON MIT SCHADSTOFFEN BELADENEN GASEN**
PROCESS AND DEVICE FOR CLEANING GASES LADEN WITH NOXIOUS SUBSTANCES
PROCEDE ET DISPOSITIF POUR L'EPURATION DE GAZ CHARGES DE SUBSTANCES POLLUANTES

(30) Priorität: 13.02.1991 DE 4104285
(43) Veröffentlichungstag der Anmeldung: 01.12.1993
(73) Patentinhaber: Henninger-Geier, Waltraud, D-78176 Blumberg (DE)
(72) Erfinder: Henninger-Geier, Waltraud, D-78176 Blumberg (DE)
(74) Vertreter: Wolf, Eckhard, Dr.-Ing.
(86) Internationale Anmeldenummer: EP9200157
(87) Internationale Veröffentlichungsnummer: WO9214537

(56) Entgegenhaltungen:
- EP-A- 0 281 844
- DE-A- 3 823 995
- DE-A- 3 844 629

## Beschreibung

Die Erfindung betrifft ein Verfahren und eine Vorrichtung zum Reinigen von mit Schadstoffen beladenen Gasen, wobei die Gase durch mindestens ein mit einem Schaumbildner versetztes wässriges Schäumbad geleitet und dabei zumindest zum Teil beim Durchtritt durch die jeweilige Badoberfläche in Schaumblasen eingeschlossen und mit diesen von der Badoberfläche wegtransportiert werden und wobei im Verlauf des Blasentransportes zumindest ein Teil der Schadstoffe an der Blasenhaut sorptiv gebunden wird und die Gasblasen unter Mitnahme der gebundenen Schadstoffe und unter Freisetzung der zumindest teilweise gereinigten Gase verflüssigt werden.

Bei einem bekannten Verfahren dieser Art, das bei geringem Förderenergieeinsatz und Waschflüssigkeitsbedarf eine wirksame Entstaubung und sorptive Schadgas-Bindung auch bei wechselnden Abgaszusammensetzungen gewährleistet, werden die in die Schaumblasen eingeschlossenen Abgase in einer hohen Blasensäule nach oben geleitet, so daß sie mit möglichst langer Verweildauer mit der Blasenhaut in Wechselwirkung stehen und dort sorptiv gebunden werden. Die Schaumblasen werden dort vor allem im oberen Bereich der Blasensäule mittels eines Schaumzerstörers durch Platzen unter Bildung kleiner, mit den Schadstoffen beladener Tröpfchen verflüssigt. Die nach unten fallenden Tröpfchen gelangen unmittelbar oder mittelbar in die Badflüssigkeit zurück. Je nach Konsistenz und Festigkeit der Schaumblasen kann es entweder zu Schwierigkeiten bei der Zerstörung der Blasen am Schaumzerstörer und damit zu einem Austreten von Schaum über die nach außen offene Abgasleitung oder zu einer zu frühen Tropfenbildung kommen. Im letzteren Falle werden in die Blasensäule durch die niederfallenden Tröpfchen blasenfreie Kanäle gerissen, durch die noch ungereinigtes Abgas nahezu ungehindert ins Freie gelangen kann. Hinzu kommt, daß die Schaumblasen in der Schaumsäule entgegen der Schwerkraft nach oben transportiert werden und dadurch einen erhöhten Energiebedarf erfordern. Zur Verbesserung des Reinigungseffekts wurde dort vorgeschlagen, die Abgase durch zwei oder mehrere, in Strömungsrichtung übereinander angeordnete, mit einem Schaumbildner versetzte wässrige Schäumbäder jeweils unter Schaumbildung hindurchzuleiten, wobei jeweils zwei aufeinanderfolgende Schäumbäder über eine mit einem Schaumzerstörer bestückte Umlenkstrecke miteinander verbunden sind. Die Wirksamkeit einer solchen Schäumbadkolonne hängt dabei sehr davon ab, ob die Schaumblasen im zwischengeschalteten Schaumzerstörer quantitativ verflüssigt werden können, was bei den dort verwendeten, gegebenenfalls mit scharfen Kanten oder Spitzen versehenen Lochplatten eine sehr genaue Einstellung der mechanischen Blaseneigenschaften durch Verwendung geeigneter, an die Zusammensetzung und Zustandsgrößen der Waschflüssigkeit angepaßter Schaumbildner erfordert.

Das bekannte Verfahren ist vor allem für Rauchgase, insbesondere Verbrennungsabgase und Räuchereiabgase bestimmt und hat sich für diese auch bewährt. Dagegen ließ das Rückhaltevermögen bei organischen Dämpfen beispielsweise bei organischen Lösemittel-, Benzin- und Benzoldämpfen, zu wünschen übrig. Dies gilt vor allem, wenn diese Dämpfe eine hohe Konzentration mit geringem Luftanteil aufweisen. Dies rührt nicht zuletzt auch daher, daß die Haut der Schaumblasen im Zuge des Aufsteigens durch Verdampfen von Wasser zunehmend austrocknet und dabei eventuell bereits gebundene oder gelöste Schadstoffe wieder freisetzt.

Der Erfindung liegt daher die Aufgabe zugrunde, das bekannte Verfahren und die bekannte Vorrichtung der eingangs angegebenen Art dahingehend weiterzuentwickeln, daß die Schaumverflüssigung vereinfacht und der Reinigungseffekt vor allem gegenüber organischen Gasen und Dämpfen verbessert wird.

Zur Lösung dieser Aufgabe wird gemäß der Erfindung vorgeschlagen, daß die an der Oberfläche eines der Schäumbäder austretenden Schaumblasen gegen die Oberfläche eines in Strömungsrichtung folgenden Schaumverflüssigungs-und Auswaschbades gedrückt und dabei verflüssigt werden. Die in den Schaumblasen sorptiv gebundenen Schadstoffe gelangen dabei unmittelbar in das Schaumverflüssigungsbad und können aus diesem in einer Reinigungsstrecke durch ständiges Umwälzen entfernt werden. Andererseits können die beim Verflüssigen der Schaumblasen im Schaumverflüssigungsbad freigesetzten und zum Teil noch mit Schadstoffen beladenen Gase unter die Oberfläche eines dem Auswaschbad nachgeordneten weiteren Schäumbades eingeleitet und dabei zumindest zum Teil beim Durchtritt durch einen Oberflächenteil des Schäumbades in Schaumblasen eingeschlossen und mit diesen von dem betreffenden Oberflächenteil wegtransportiert und einer erneuten Verflüssigung in einem weiteren Schaumverflüssigungsbad zugeleitet werden.

Gemäß einer bevorzugten Ausgestaltung der Erfindung werden die mit den Schadstoffen beladenen Gase von oben her in das erste Schäumbad eingeleitet, während die in Strömungsrichtung hinter dem ersten Schäumbad befindlichen Schaumverflüssigungs- und Schäumbäder stufenweise von oben nach unten mit den Schaumblasen bzw. den freigesetzten Gasen unter Druck beaufschlagt werden. Die aus dem letzten Schäumbad austretenden Schaumblasen werden vorteilhafterweise gegen die Oberfläche eines letzten Schaumverflüssigungs- und Auswaschbades gedrückt und dabei verflüssigt, während die dabei freigesetzten Gase über der Oberfläche des letzten Schaumverflüssigungsbad aufgefangen und als Abgasstrom abgeleitet werden.

Durch die stufenweise Aufeinanderfolge von Schäumbädern und Schaumverflüssigungsbädern wird erreicht, daß die maßgeblich am Reinigungseffekt beteiligten Schaumblasen als Naßschaum mit einem hohen Wasseranteil in der Blasenhaut mit einem hohen Bindevermögen für die Schadstoffe vorliegen.

Da es andererseits erwünscht ist, daß die aus dem Wäscher austretenden Abgase nur einen geringen Wasseranteil aufweisen, wird gemäß einer weiteren bevorzugten

Ausgestaltung der Erfindung vorgeschlagen, daß die aus dem letzten Schäumbad austretenden Schaumblasen über mindestens eine, vorzugsweise jeweils ein Schaumverflüssigungsbad enthaltende Kondensationsstrecke geleitet werden, bevor die Schaumblasen und/oder die freigesetzten Gase zum letzten Schaumverflüssigungsbad gelangen.

Wie bereits erwähnt, wird die Flüssigkeit aus den Schaumverflüssigungsbädern kontinuierlich oder diskontinuierlich abgezogen und von flüchtigen und/oder festen Schadstoffen gereinigt. Um Feststoffe auszuscheiden, kann hierzu die aus den Schaumverflüssigungsbädern abgezogene Flüssigkeit in ein Absetzbecken geleitet werden.

Weiter können von der Oberfläche der aus den Schaumverflüssigungsbädern oder dem oberen Teil des Absetzbeckens abgezogenen, gegebenenfalls erwärmten Badflüssikgeit flüchtige Schadstoffe abgesaugt und entlang einer Kühlstrecke kondensiert und in flüssiger Form aufgefangen werden. Etwaiges beim Absaugen mitgeschlepptes Wasser kann entlang der Kühlstrecke ausgefroren und in bestimmten Zeitabständen beispielsweise mit Heißluft abgetaut und dabei vorzugsweise in den Badflüssigkeitskreislauf zurückgeführt werden. Vorteilhafterweise wird die aus den Schaumverflüssigungsbädern oder dem Absetzbecken abgezogene und gereinigte Badflüssigkeit zumindest teilweise in die Schäumbäder zurückgeführt und ersetzt dort im Sinne einer Niveauregulierung die beim Blasentransport verschleppte Badflüssigkeit.

Weiter hat es sich bei bestimmten Anwendungfällen, in denen die zu reinigenden Gase Flüssig- und/oder Festbestandteile enthalten, als besonders vorteilhaft erwiesen, wenn die Gase vor dem Eintritt in das erste Schäumbad durch ein vorzugsweise aus Metallspänen bestehendes Filterbett hindurchgeleitet und dabei unter Abscheidung der Flüssig- und/oder Festbestandteile vorgereinigt werden.

Die Reinigung des Filterbettes kann dabei vorteilhafterweie durch Rückspülen von Badflüssigkeit in vorgegebenen Zeitabschtänden erfolgten. Diese Vorfiltration hat sich vor allem bei der Abgasreinigung von Lackierstraßen als vorteilhaft erwiesen, weil dort die mit den Lösemitteldämpfen mitgeschleppten flüssigen Lackteilchen an den Metallspänen des Filterbettes niedergeschlagen werden und damit die Blasenbildung in den Schäumbädern nicht beeinträchtigen.

Besonders vorteilhaft ist es, wenn die Zusammensetzung der Badflüssigkeit einerseits und die in den Gasen enthaltenen Schadstoffe andererseits so aufeinander abgestimmt sind, daß sich in jeder Verfahrensstufe aufgrund der thermodynamischen Eigenschaften eine allmähliche Abkühlung ergibt, die grundsätzlich zu einem besseren Abscheidegrad führt.

Bei einer Vorrichtung zur Durchführung des erfindungsgemäßen Verfahrens, die mindestens ein mit einem Schaumbildner versetztes und mit den zu reinigenden Gasen unter Schaumbildung beaufschlagbares wässriges Schäumbad und ein in Strömungsrichtung hinter dem Schäumbad angeordnetes Abgasrohr zur Ableitung der gereinigten Gase aufweist, wird gemäß der Erfindung vorgeschlagen, daß dem Schäumbad ein Schaumverflüssigungsbad zur Aufnahme und Verflüssigung der in dem Schäumbad erzeugten Schaumblasen nachgeschaltet ist. Vorteilhafterweise ist dem Schaumverflüssigungsbad eine weiteres Schäumbad nachgeschaltet, unter dessen Oberfläche die im Schaumverflüssigungsbad beim Verflüssigen der Schaumblasen freigesetzten Gase unter erneuter Schaumbildung einleitbar sind.

Gemäß einer bevorzugten Ausgestaltung der Erfindung sind die miteinander kommunizierenden Schäum- und Schaumverflüssigungsbäder in Strömungsrichtung untereinander angeordnet. Weiter kann zwischen dem letzen Schäumbad und dem letzen Schaumverflüssigungsbad zusätzlich eine Kondensationsstrecke angeordnet sein, die durch mindestens ein Schaumverflüssigungsbad ein leeres Schäumbadbecken gebildet sein kann.

Eine weitere vorteilhafte Ausgestaltung der Erfindung sieht einen die Schaumverflüssigungsbecken mit den Schäumbädern verbindenden Reinigungskreislauf für die Badflüssigkeit vor, wobei der Reinigungskreislauf ein Absetzbecken für Feststoffe und/oder einen vorzugsweise heizbaren Evakuierbehälter zum Absaugen flüssiger Schadstoffe enthalten kann. An den Evakuierbehälter kann eine Kühlstrecke zum Kondensieren der abgesaugten flüchtigen Schadstoffe und zum Ausfrieren der mitgeschleppten Badflüssigkeit vorgesehen werden.

Eine besonders kompakte Bauweise der Reinigungskolonne wird dadurch erzielt, daß die Schaumverflüssigungsbäder mit einem Schaumblasen-abgebenden Oberflächenteil des darüber befindlichen Schäumbads einerseits und über ein unter den Flüssigkeitsspiegel eintauchendes Haubenrohr mit dem darunter befindlichen Schäumbad andererseits kommuniziert. Um eine gleichmäßige Schaumbildung im Schäumbad zu gewährleisten, ist der untere freie Rand des in das Schäumbad senkrecht eintauchenden Haubenrohrs umlaufend gezackt oder wellig ausgebildet.

Im folgenden wird die Erfindung anhand zweier in der Zeichnung in schematischer Weise dargestellter Ausführungsbeispiele näher erläutert: Es zeigen:
- Fig. 1: ein Schema eines mehrstufigen Gaswäschers mit Reinigungskreislauf für die Badflüssigkeit und Kondensationsstrecke für flüchtige Schadstoffe;
- Fig. 2: ein Schema eines gegenüber Fig. 1 abgewandelten Gaswäschers mit vorgeschaltetem Spänefilter.

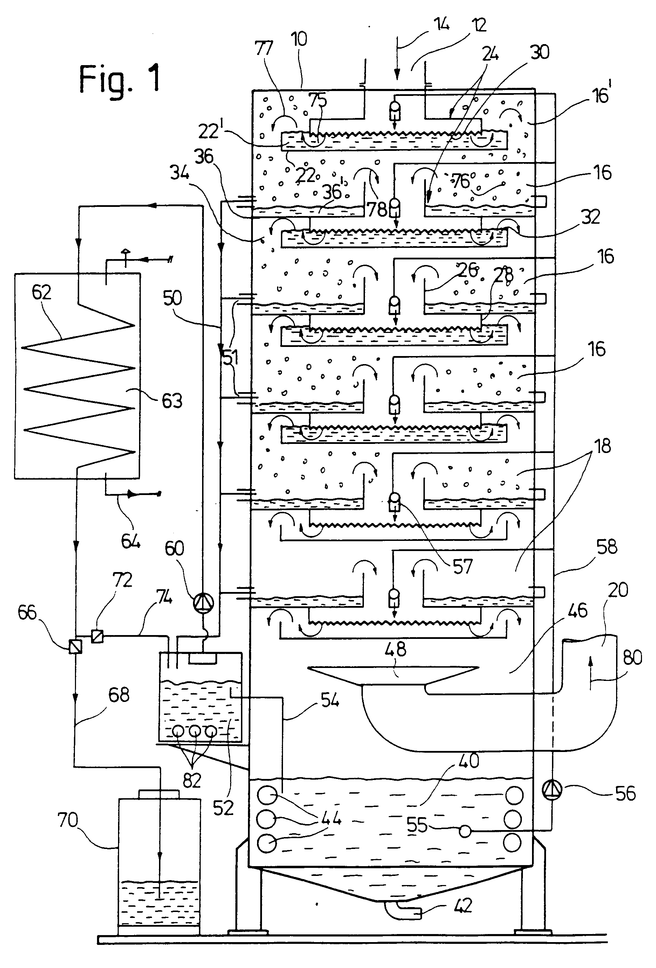

Die in der Zeichnung dargestellten Gaswäscher weisen einen im wesentlichen zylindrischen Reaktorbehälter 10 auf, der über eine Einlaßöffnung 12 in Richtung des Pfeils 14 mit dem zu reinigenden, schadstoffbeladenen Gas unter Druck beaufschlagbar ist und der mehrere, in Strömungsrichtung des Gases untereinander angeordnete Wäscherstufen 16 und Kondensationsstufen 18 sowie ein Abluftrohr 20 zur Abgabe der gereinigten Abgase aufweist. Jede Wäscherstufe 16 enthält ein Schäumbadbecken 22, in das von oben her ein Haubenrohr 24 senkrecht eintaucht. Jedes Haubenrohr weist einen nach oben weisenden zentralen Zuführstutzen 26 und einen sich an den Zuführstutzen 26 nach unten anschließenden Haubenteil 28 mit größerem Querschnitt auf. Der Haubenteil 28 weist an seinem in das Unterbecken 22 eintauchenden Rand eine zick-zack-förmige Kontur auf. In den Wäscherstufen 16, 16' ist das Unterbecken 22 mit einem wässrigen, mit einem Schaumbildner versetzten Schäumbad 22' so weit gefüllt, daß der Zick-zack-Rand 30 des Haubenrohrs vollständig in das Bad eintaucht. Der Durchmesser des Unterbeckens 22 ist größer als der Durchmesser des Haubenteils 28. Dadurch wird durch den Haubenteil 28 einerseits und durch den Außenrand ein ringförmiger Bereich 32 begrenzt, über welchen die Oberfläche des Unterbeckens über eine zwischen Unterbecken und Reaktorwand freibleibende, im wesentlichen ringförmige Durchtrittsöffnung 34 mit der darunter befindlichen Wäscherstufe 16 bzw. Kondensationsstufe 18 kommuniziert. Im oberen Bereich der Wäscherstufen 16 befindet sich zusätzlich ein nach innen durch den Zuführstutzen 26 des betreffenden Haubenrohrs 24 begrenztes ringförmiges Oberbecken 36, das an seinem Außendurchmesser bis zur Außenwand des Reaktorbehälters 10 reicht und das mit einer Badflüssigkeit (Schaumverflüssigungsbad) 36' bis zu einem vorgegebenen Pegel gefüllt ist. Dieses Bad befindet sich in seinem Außenbereich unmittelbar unterhalb der Durchtrittsöffnung 34 der darüber befindlichen Wäscher- oder Kondensationsstufe 16, 18. Bei dem in Fig. 1 gezeigten Ausführungsbeispiels fehlt in der obersten Wäscherstufe 16' das Oberbecken 36.

Die Kondensationsstufen 18 sind konstruktiv gleich ausgebildet wie die Wäscherstufen 16. Sie enthalten ebenfalls ein ringförmiges Oberbecken 36 und ein darunter befindliches Unterbecken 22, die über ein Haubenrohr 24 miteinander verbunden sind. Während die Oberbecken mit Waschflüssigkeit 36' gefüllt sein können, sind die Unterbecken 22 leer und bilden eine Umlenkstrecke für die nach unten strömenden Gase. Damit ist es je nach dem gewünschten Reinigungsgrad und dem zur Verfügung stehenden Förderdruck durch eine einfache Maßnahme, nämlich durch Füllen oder Nichtfüllen der Unterbecken mit Badflüssigkeit, möglich, die Anzahl der Wäscherstufen 16 und Kondensationsstufen 18 zu variieren.

Im Bodenbereich des Reaktorbehälters 10 befindet sich ein letztes Schaumverflüssigungsbad 40, das zugleich die Funktion eines Absetzbeckens aufweisen kann. Grundsätzlich ist es jedoch möglich, das Absetzbecken auch außerhalb des Reaktorbehälters 10 anzuordnen, wenn hierfür ein größeres Volumen benötigt wird. Die in der Waschflüssigkeit enthaltenen Feststoffe sinken im Absetzbecken 40 nach unten und können dort über einen Absaugstutzen 42 von Zeit zu Zeit abgezogen werden. Innerhalb des Absetzbeckens befinden sich Kühlschlangen 44, über die die Temperatur zur Erhöhung des Abscheidungsgrades um ein gewünschtes Maß abgesenkt werden kann. Im Gasraum 46 über dem Absetzbad 40 befindet sich ein mit der Abluftleitung 20 verbundener trichterförmiger Stutzen 48 zur Aufnahme des gereinigten Abluftstroms.

Die verschiedenen Becken des Reaktorbehälters 10 sind an einen in Fig. 1 schematisch dargestellten Reinigungskreislauf angeschlossen. Dabei münden die Oberbecken 36 über je einen Überlauf- oder Absaugstutzen 51 und eine Überlaufleitung 50 in einen Reinigungs- bzw. Evakuierungsbehälter 52, der seinerseits über eine Ablaufleitung 54 mit dem im Reaktorbehälter 10 integrierten Absetzbecken 40 verbunden ist. Weiter wird über eine Ansaugstelle 55 im Absetzbecken 40 und eine Umwälzpumpe 56 gereinigte Badflüssigkeit den Zulaufstellen 57 zugeführt, die über eine gemeinsame Verbindungsleitung 58 nach Maßgabe des Flüssigkeitspegels in den Schäumbädern 22' gespeist werden.

Der Gasraum des Evakuierungsbehälters 52 ist über eine Evakuierungspumpe 60 mit einer Kondensationsstrecke 62 verbunden, die außenseitig mit der Kaltseite 63 eines Kältemittelkreislaufs 64 thermisch gekoppelt ist. Die Kondensationsschlange 62 mündet wahlweise über ein Magnetventil 66 und eine Leitung 68 in einen Sammelbehälter 70 oder über ein Magnetventil 72 und eine Leitung 74 in den Evakuierungsgehälter 52.

Die Funktion des in Fig. 1 gezeigten Gaswäschers ist wie folgt:
Die schadstoffbeladenen Gase werden über die Einlaßöffnung 12 in Richtung des Pfeils 14 durch das Haubenrohr 24 hindurch unter Druck in das Schäumbad 22' der ersten Wäscherstufe 16' eingeleitet. Die vorzugsweise basisch eingestellte Badflüssigkeit ist mit einem aus Tensiden bestehenden Schaumbildner in einer solchen Menge und Zusammensetzung versetzt, daß die über das Haubenrohr 24 unterhalb des Flüssigkeitsspiegels in die Badflüssigkeit 22' gelangenden Gase (Pfeile 75) beim Durchtritt durch die Oberfläche im äußeren Ringbereich 32 zum überwiegenden Teil in Schaumblasen eingeschlossen werden. Die Schaumblasen 76 gelangen dann in Richtung der Pfeile 77 durch die Ringöffnung 34 zu dem darunter befindlichen Ringbecken 36 und werden dort unter der Einwirkung des Förderdrucks gegen die Oberfläche des Schaumverflüssigungsbades 36' gedrückt. Die Schaumblasen sind so eingestellt, daß sie bei diesem Vorgang verflüssigt werden. Die in den Schaumblasen gelösten oder sorptiv gebundenen Schadstoffe gelangen dabei in das Bad 36', während die freigesetzten Gase in Richtung der Pfeile 78 durch das Haubenrohr in das Schäumbad 22' der betreffenden Wäscherstufe 16 eingeleitet werden. Dieser Vorgang wiederholt sich in den nachfolgenden Wäscherstufen 16. Von der letzten Wäscherstufe 16 gelangen die Schaumblasen in die nachfolgenden Kondensationsstufen 18, in denen sie unter Freisetzung der gereinigten Gase über die leeren Schäumbadbecken 36 zum Gasraum 46 des Absetzbeckens 40 und von dort über die Abluftleitung 20 in Richtung des Pfeils 80 ins Freie gelangen.

Bei diesem Vorgang sammeln sich die Schadstoffe überwiegend in den Schaumverflüssigungsbädern an. Diese Badflüssigkeit wird im Reinigungskreislauf ständig umgewälzt und gereinigt. Die flüchtigen Inhaltsstoffe, wie organische Lösungsmittel, Benzin oder Benzol, werden über den Gasraum des Evakuierungsbehälters 52 abgesaugt, in der gekühlten Kondensationsstrecke 62 verflüssigt und von dort in den Sammelbehälter 70 geleitet. Im Sinne einer höheren Ausbeute kann es vorteilhaft sein, wenn die Flüssigkeit im Evakuierungsbehälter 52 über Heizschlangen 82, die mit der Warmseite des Kältemittelkreislaufs 64 verbunden sein können, aufgeheizt wird. Von Zeit zu Zeit muß die Kondensationsstrecke 62 beispielsweise durch Hindurchleiten von Heißluft abgetaut werden, um das dort ausgefrorene Wasser in den Evakuierungsbehälter 52 zurückzuleiten. Die von den flüchtigen Schadstoffen weitgehend befreite, gegebenenfalls noch feste Schadstoffe enthaltende Badflüssigkeit wird aus dem Evakuierungsbehälter 52 in das Absetzbecken 40 geleitet, von dem aus über die Pumpe 46 und die Leitung 58 eine Rückführung in die einzelnen Schäumbäder 22' erfolgt.

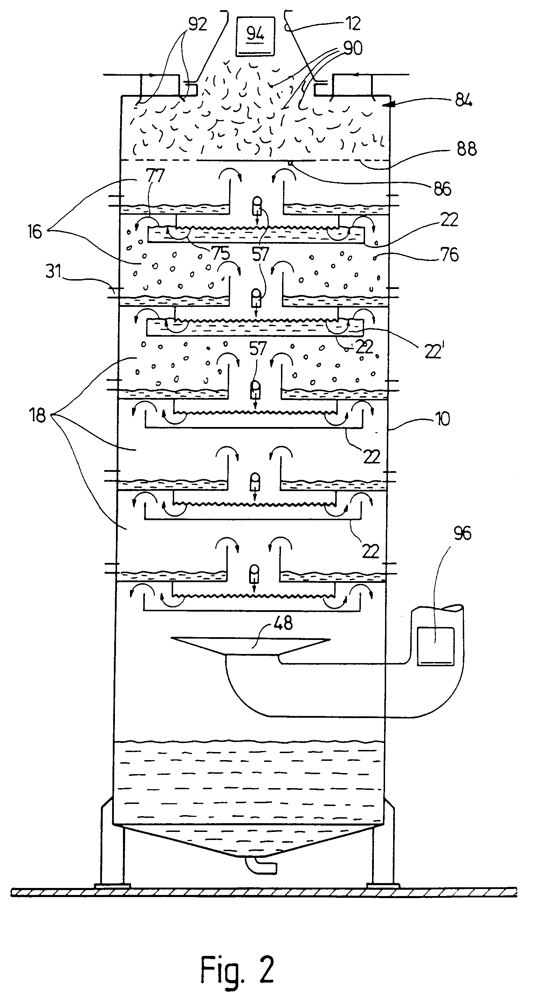

Das in Fig. 2 gezeigte Ausführungsbeispiel eines Gaswäschers unterscheidet sich von dem Ausführungsbeispiel nach Fig. 1 im wesentlichen dadurch, daß den Wäscherstufen 16 ein Vorfilter (84) vorgeschaltet ist. Das Vorfilter 84 enthält ein auf einem zentralen Flachboden 86 und einem daran radial nach außen anschließenden ringförmigen Siebboden 88 aufliegendes Filterbett 90, das aus einer Anhäufung von Metallspänen, insbesondere Aluminiumspänen besteht. Der Siebboden 88 mündet in den Gasraum des Oberbeckens der ersten Wäscherstufe 16. Die Wäscherstufen 16 und die nachfolgenden Kondensationsstufen 18 entsprechen in ihrer konstruktiven Ausgestaltung dem Ausführungsbeispiel nach Fig. 1.

In dem Vorfilter 84 werden etwaige im ankommenden Gas enthaltene Flüssig- und Feststoff-Partikel niedergeschlagen, bevor das auf diese Weise vorgereinigte Gas in die Wäscher- und Kondensationsstufen 16, 18 gelangt. Die Vorfiltration findet vor allem bei der Abluftreinigung in Lackierstraßen Anwendung, bei denen mit den Lösemitteldämpfen Farb- oder Lackpartikel mitgeschleppt werden, die zu einer Verschlechterung der Reinigungswirkung in den Wäscherstufen 16 führen könnten.

Das Vorfilter muß von Zeit zu Zeit durch Rückspülen gereinigt werden. Hierzu kann die vorzugsweise basische Badflüssigkeit verwendet werden, die dem Filterbett in der Rückspülstellung über Düsen 92 zugeleitet wird. Explosionsschutzklappen 94, 96 am Ein- und Ausgang des Wäschers sorgen dafür, daß etwaige beim Rückspülvorgang entstehende entzündbare Gase (wie beispielsweise Wasserstoff) mit dem Luftsauerstoff sich nicht entzünden können. Der Rückspülbetrieb kann während der Nachtstunden erfolgen, so daß die Tagstunden in vollem Umfang für die Gasreinigung zur Verfügung stehen.

Zusätzlich kann im Bereich des Abgasrohrs 20 ein rückspülbares Nachfilter angeordnet werden, das ähnlich aufgebaut sein kann wie das Vorfilter.

Zusammenfassend ist folgendes festzustellen:
Die Erfindung bezieht sich auf ein Verfahren und eine Vorrichtung zum Reinigen von mit Schadstoffen beladenen Gasen, bei welchen die Gase durch mindestens ein mit einem Schaumbildner versetztes wässriges Schäumbad 22' geleitet und dabei zumindest zum Teil beim Durchtritt durch die Badoberfläche in Schaumblasen 76 eingeschlossen und mit diesen von der Badoberfläche wegtransportiert werden. Im Verlauf des Blasentransports wird zumindest ein Teil der Schadstoffe an der Blasenhaut sorptiv gebunden, so daß die Schaumblasen unter Mitnahme der gebundenen Schadstoffe und unter Freisetzung der zumindest teilweise gereinigten Gase verflüssigt werden können. Um auch in Wasser unlösliche Schadstoffe, wie organische Lösungsmittel, Benzin oder Benzol, weitgehend quantitativ abtrennen zu können, wird gemäß der Erfindung vorgeschlagen, daß die an der Oberfläche des Schäumbades 22' austretenden Schaumblasen von oben nach unten gegen die Oberfläche eines in Strömungsrichtung darunter angeordneten Schaumverflüssigungsbads 36' gedrückt und dabei verflüssigt werden, wobei die beim Verflüssigen der Schaumblasen im Schaumverflüssigungsbad 36' freigesetzten Gase unter die Oberfläche eines dem Schaumverflüssigungsbad 36' nachgeordneten weiteren Schäumbades 22' unter erneuter Schaumbildung eingeleitet werden. Die Badflüssigkeit aus den Schaumverflüssigungsbädern 36' wird in einem Reinigungskreislauf ständig umgewälzt und von den Schadstoffen befreit und in gereinigtem Zustand zumindest teilweise in die Schäumbäder 22' zurückgeführt.

## Patentansprüche

1. Verfahren zum Reinigen von mit Schadstoffen beladenen Gasen, bei welchem die Gase durch mindestens ein mit einem Schaumbildner versetztes wässriges Schäumbad geleitet und dabei zumindest zum Teil beim Durchtritt durch die Badoberfläche in Schaumblasen eingeschlossen und mit diesen von der Badoberfläche wegtransportiert werden, wobei im Verlauf des Blasentransports zumindest ein Teil der Schadstoffe an der Blasenhaut sorptiv gebunden wird und die Gasblasen unter Mitnahme der gebundenen Schadstoffe und unter Freisetzung der zumindest teilweise gereinigten Gase verflüssigt werden, **dadurch gekennzeichnet,** daß die an der Oberfläche des Schäumbades austretenden Schaumblasen gegen die Oberfläche eines in Strömungsrichtung folgenden Schaumverflüssigungsbades gedrückt und dabei verflüssigt werden.

2. Verfahren nach Anspruch 1, **dadurch gekennzeichnet,** daß die beim Verflüssigen der Schaumblasen im Schaumverflüssigungsbad freigesetzten Gase unter die Oberfläche eines dem Schaumverflüssigungsbad nachgeordneten weiteren Schäumbades geleitet und dabei zumindest zum Teil beim Durchtritt durch einen Oberflächenteil des Schäumbades in Schaumblasen eingeschlossen und mit diesen von dem Oberflächenteil wegtransportiert werden.

3. Verfahren nach Anspruch 1 oder 2, **dadurch gekennzeichnet,** daß die mit den Schadstoffen beladenen Gase von oben her in das erste Schäumbad eingeleitet werden.

4. Verfahren nach einem der Ansprüche 1 bis 3, **dadurch gekennzeichnet,** daß die in Strömungsrichtung hinter dem ersten Schäumbad befindlichen Schaumverflüssigungs- und Schäumbäder stufenweise von oben nach unten mit den Schaumblasen bzw. den freigesetzten Gasen unter Druck beaufschlagt werden.

5. Verfahren nach einem der Ansprüche 1 bis 4, **dadurch gekennzeichnet,** daß die aus dem letzten Schäumbad austretenden Schaumblasen gegen die Oberfläche eines letzten Schaumverflüssigungsbades gedrückt und dabei verflüssigt werden, und daß die dabei freigesetzten Gase über der Oberfläche des letzten Schaumverflüssigungsbades aufgefangen und als Abgasstrom abgeleitet werden.

6. Verfahren nach Anspruch 5, **dadurch gekennzeichnet,** daß die aus dem letzten Schäumbad austretenden Schaumblasen über mindestens eine vorzugsweise jeweils ein Schaumverflüssigungsbad enthaltende Kondensationsstrecke geleitet werden, bevor die Schaumblasen und/oder die freigesetzten Gase zum letzen Schaumverflüssigungsbad gelangen.

7. Verfahren nach einem der Ansprüche 1 bis 6, **dadurch gekennzeichnet,** daß die wässrige Badflüssigkeit aus den Schaumverflüssigungsbädern kontinuierlich oder diskontinuierlich abgezogen und von flüchtigen und/oder festen Schadstoffen gereinigt wird.

8. Verfahren nach Anspruch 7, **dadurch gekennzeichnet,** daß die aus den Schaumverflüssigungsbädern abgezogene Badflüssigkeit in ein Absetzbecken geleitet wird.

9. Verfahren nach Anspruch 7 oder 8, **dadurch gekennzeichnet,** daß von der Oberfläche der aus den Schaumverflüssigungsbädern und/oder dem oberen Teil des Absetzbeckens abgezogenen, gegebenenfalls erwärmten Badflüssigkeit flüchtige Schadstoffe abgesaugt werden.

10. Verfahren nach Anspruch 9, **dadurch gekennzeichnet,** daß die abgesaugten flüchtigen Schadstoffe entlang einer Kühlstrecke kondensiert und in flüssiger Form aufgefangen werden.

11. Verfahren nach Anspruch 10, **dadurch gekennzeichnet,** daß das beim Absaugen mitgeschleppte Wasser entlang der Kühlstrecke ausgefroren und in bestimmten Zeitabständen, beispielsweise mit Heißluft, abgetaut und dabei vorzugsweise in den Badflüssigkeitskreislauf zurückgeführt wird.

12. Verfahren nach einem der Ansprüche 7 bis 11, **dadurch gekennzeichnet,** daß die aus den Schaumverflüssigungsbädern oder dem Absetzbecken abgezogene und gereinigte Badflüssigkeit zumindest teilweise in die Schäumbäder zurückgeführt wird.

13. Verfahren nach einem der Ansprüche 1 bis 12, **dadurch gekennzeichnet,** daß die Gase vor dem Eintritt in das erste Schäumbad durch ein vorzugsweise aus Metallspänen bestehendes Filterbett hindurchgeleitet und dabei unter Abscheidung von Flüssig- oder Festbestandteilen vorgereinigt werden.

14. Verfahren nach Anspruch 13, **dadurch gekennzeichnet,** daß das Filterbett in vorgegebenen Zeitabständen vorzugsweise mit Badflüssigkeit rückgespült wird.

15. Vorrichtung zur Reinigung von mit Schadstoffen beladenen Gasen mit mindestens einem mit einem Schaumbildner versetzten und mit den zu reinigenden Gasen unter Schaumbildung beaufschlagbaren wässrigen Schäumbad (22') und einem in Strömungsrichtung hinter dem Schäumbad angeordneten Abgasrohr (20) zur Ableitung der gereinigten Gase zur Durchführung des Verfahrens nach einem der Ansprüche 1 bis 14, **dadurch gekennzeichnet,** daß dem Schäumbad (22') ein Schaumverflüssigungsbad (36') zur Aufnahme und Verflüssigung der in dem Schäumbad (22') erzeugten Schaumblasen (76) nachgeschaltet ist.

16. Vorrichtung nach Anspruch 15, **dadurch gekennzeichnet,** daß dem Schaumverflüssigungsbad (36') ein weiteres Schäumbad (22') nachgeschaltet ist, unter dessen Oberfläche die im Schaumverflüssigungsbad (36') beim Verflüssigen der Schaumblasen (76) freigesetzten Gase unter erneuter Schaumbildung einleitbar sind.

17. Vorrichtung nach Anspruch 15 oder 16, **dadurch gekennzeichnet,** daß die miteinander kommunizierenden Schäum- und Schaumverflüssigungsbäder (22',36') in Strömungsrichtung untereinander angeordnet sind.

18. Vorrichtung nach einem der Ansprüche 15 bis 17, **dadurch gekennzeichnet,** daß unter dem letzten Schäumbad (22') ein letztes Schaumverflüssigungsbad (40) angeordnet ist, und daß das Abgasrohr (20) mit dem über dem letzten Schaumverflüssigungsbad (40) befindlichen Gasraum (46) kommuniziert.

19. Vorrichtung nach Anspruch 18, **dadurch gekennzeichnet,** daß das letzte Schäumbad (22') über mindestens eine, vorzugsweise ein Schaumverflüssigungsbad (36') enthaltende Kondensationsstrecke (18) mit dem letzten Schaumverflüssigungsbad (40) verbunden ist.

20. Vorrichtung nach Anspruch 19, **dadurch gekennzeichnet,** daß die Kondensationsstrecke (18) durch ein Schaumverflüssigungsbad (36') und ein leeres Schäumbadbecken (22) gebildet ist.

21. Vorrichtung nach einem der Ansprüche 15 bis 20, **gekennzeichnet durch** einen die Schaumverflüssigungsbäder (36') mit den Schäumbädern (22') verbindenden Reinigungskreislauf (50,52,54,56,57, 58) für die Badflüssigkeit.

22. Vorrichtung nach Anspruch 21, **dadurch gekennzeichnet,** daß der Reinigungskreislauf ein Absetzbecken (40) enthält.

23. Vorrichtung nach Anspruch 21 oder 22, **dadurch gekennzeichnet,** daß im Reinigungskreislauf ein vorzugsweise heizbarer Evakuierungsbehälter (52) zum Absaugen flüchtiger Schadstoffe angeordnet ist.

24. Vorrichtung nach Anspruch 23, **gekennzeichnet durch** eine an den Evakuierungsbehälter (52) angeschlossene Kühlstrecke (62) zum Kondensieren der abgesaugten flüchtigen Schadstoffe.

25. Vorrichtung nach Anspruch 24, **gekennzeichnet durch** eine Einrichtung zum Abtauen und Rückführen von in der Kühlstrecke (62) unter Eisbildung ausgefrorener Badflüssigkeit.

26. Vorrichtung nach einem der Ansprüche 15 bis 25, **dadurch gekennzeichnet,** daß dem ersten Schäumbad (16,16') ein Vorfilter (84) vorgeschaltet ist.

27. Vorrichtung nach Anspruch 26, **dadurch gekennzeichnet,** daß das Vorfilter (84) Metallspäne (90), vorzugsweise Aluminiumspäne als Filtermaterial enthält.

28. Vorrichtung nach Anspruch 26 oder 27, **dadurch gekennzeichnet,** daß das Vorfilter (84) mit Badflüssigkeit rückspülbar ist.

29. Vorrichtung nach einem der Ansprüche 15 bis 28, **dadurch gekennzeichnet,** daß mindestens eines der Schaumverflüssigungsbäder (36') mit einem Schaumblasen-abgebenden Oberflächenteil (32) des darüber befindlichen Schäumbads (22) und über ein unter den Flüssigkeitsspiegel eintauchendes Haubenrohr (24) mit dem darunter befindlichen Schäumbad (22') kommuniziert.

30. Vorrichtung nach Anspruch 29, **dadurch gekennzeichnet,** daß der untere freie Rand des in das Schäumbad (22') eintauchenden Haubenrohrs (24) umlaufend gezackt oder wellig ausgebildet ist.

31. Vorrichtung nach einem der Ansprüche 15 bis 30, **dadurch gekennzeichnet,** daß auf der Seite des Abgasrohrs (20) ein Gastrockner oder ein rückspülbares Nachfilter angeordnet ist.

32. Vorrichtung nach Anspruch 31, **dadurch gekennzeichnet,** daß das Nachfilter Metallspäne, vorzugsweise Aluminiumspäne, als Filtermaterial enthält.

## Claims

1. A process for cleaning gases laden with noxious substances, in which the gases are passed through at least one aqueous foam bath to which has been added a foaming agent and are thereby enclosed in foam bubbles at least in part on passing through the bath surface and are transported away from the bath surface with said bubbles, whereby during the course of the bubble transport at least a part of the noxious substances is bound by sorption to the bubble skin and the gas bubbles are liquefied, taking along the bound noxious substances and liberating the at least partially cleaned gases, characterised in that the foam bubbles emerging on the surface of the foam bath are pressed against the surface of a subsequent foam liquefaction bath in the direction of flow and are thereby liquefied.

2. A process according to claim 1, characterised in that the gases liberated during liquefaction of the foam bubbles in the foam liquefaction bath are passed beneath the surface of a further foam bath downstream of the foam liquefaction bath and are thereby enclosed in foam bubbles at least in part on passing through a surface part of the foam bath and are transported away from the surface part with said bubbles.

3. A process according to claim 1 or 2, characterised in that the gases laden with the noxious substances are fed from above into the first foam bath.

4. A process according to one of claims 1 to 3, characterised in that the foam liquefaction and foam baths situated in the direction of flow behind the first foam bath are impinged under pressure in stages downwards with the foam bubbles and the liberated gases.

5. A process according to one of claims 1 to 4, characterised in that the foam bubbles emerging from the final foam bath are pressed against the surface of a final foam liquefaction bath and are thereby liquefied, and in that the gases thereby liberated are collected over the surface of the final foam liquefaction bath and are discharged as a waste gas stream.

6. A process according to claim 5, characterised in that the foam bubbles emerging from the final foam bath are passed via at least one condensation section preferably each containing one foam liquefaction bath, before the foam bubbles and/or the liberated gases reach the final foam liquefaction bath.

7. A process according to one of claims 1 to 6, characterised in that the aqueous bath liquor is drawn off continuously or batchwise from the foam liquefaction baths and is purified of volatile and/or solid noxious substances.

8. A process according to claim 7, characterised in that the bath liquor drawn off from the foam liquefaction baths is passed to a settling tank.

9. A process according to claim 7 or 8, characterised in that volatile noxious substances are removed by suction from the surface of the bath liquor, possibly heated, drawn off from the foam liquefaction baths and/or the upper part of the settling tank.

10. A process according to claim 9, characterised in that the volatile noxious substances removed by suction are condensed along a cooling section and collected in the liquid form.

11. A process according to claim 10, characterised in that the water entrained during removal by suction is frozen out along the cooling section and is thawed at certain time intervals, for example, with hot air, and preferably returned to the bath liquor circuit.

12. A process according to one of claims 7 to 11, characterised in that the cleaned bath liquor drawn off from the foam liquefaction baths or the settling tank is returned at least partially to the foam baths.

13. A process according to one of claims 1 to 12, characterised in that, before entering the first foam bath, the gases are passed through a filter bed composed preferably of metal chippings, and are thereby pre-cleaned with separation of liquid or solid constituents.

14. A process according to claim 13, characterised in that the filter bed is backwashed at predetermined time intervals, preferably with bath liquor.

15. A device for cleaning gases laden with noxious substances with at least one aqueous foam bath (22') to which has been added a foaming agent and which can be impinged with the gases to be cleaned, with foam formation, and a waste gas pipe (20) arranged in the direction of flow behind the foam bath for removing the cleaned gases, for carrying out the process according to one of claims 1 to 14, characterised in that a foam liquefaction bath (36') for taking up and liquefying the foam bubbles (76) produced in the foam bath (22') is installed downstream of the foam bath (22').

16. A device according to claim 15, characterised in that a further foam bath (22') is installed downstream of the foam liquefaction bath (36'), under the surface of which can be fed the gases liberated in the foam liquefaction bath (36') during liquefaction of the foam bubbles (76), with renewed foam formation.

17. A device according to claim 15 or 16, characterised in that the foam and foam liquefaction baths (22', 36') in communication with each other are arranged below one another in the direction of flow.

18. A device according to one of claims 15 to 17, characterised in that a final foam liquefaction bath (40) is arranged beneath the final foam bath (22'), and that the waste gas pipe (20) is in communication with the gas chamber (46) situated above the final foam liquefaction bath (40).

19. A device according to claim 18, characterised in that the final foam bath (22') is linked to the final foam liquefaction bath (40) by means of at least one condensation section (18) containing preferably one foam liquefaction bath (36').

20. A device according to claim 19, characterised in that the condensation section (18) is formed by a foam liquefaction bath (36') and an empty foam bath tank (22).

21. A device according to one of claims 15 to 20, characterised by a cleaning circuit (50, 52, 54, 56, 57, 58) for the bath liquor linking the foam liquefaction baths (36') to the foam baths (22').

22. A device according to claim 21, characterised in that the cleaning circuit contains a settling tank (40).

23. A device according to claim 21 or 22, characterised in that a preferably heatable evacuation vessel (52) for removing volatile noxious substances by suction is arranged in the cleaning circuit.

24. A device according to claim 23, characterised by a cooling section (62) connected to the evacuation vessel (52) for condensing the volatile noxious substances removed by suction.

25. A device according to claim 24, characterised by an installation for thawing and returning bath liquor frozen out in the cooling section (62), with ice formation.

26. A device according to one of claims 15 to 25, characterised in that a preliminary filter (84) is installed upstream of the first foam bath (16, 16').

27. A device according to claim 26, characterised in that the preliminary filter (84) contains metal chippings (90), preferably aluminium chippings, as filter material.

28. A device according to claim 26 or 27, characterised in that the preliminary filter (84) can be backwashed with bath liquor.

29. A device according to one of claims 15 to 28, characterised in that at least one of the foam liquefaction baths (36') is in communication with a foam bubble-releasing surface part (32) of the foam bath (22) situated above it and, via a hood-type pipe (24) immersed beneath the liquid level, with the foam bath (22') situated beneath it.

30. A device according to claim 29, characterised in that the lower free edge of the hood-type pipe (24) immersed in the foam bath (22') has an all-round zig-zag or wavy design.

31. A device according to one of claims 15 to 30, characterised in that a gas drier or a backwashable after-filter is arranged on the side of the waste gas pipe (20).

32. A device according to claim 31, characterised in that the after-filter contains metal chippings, preferably aluminium chippings, as filter material.

## Revendications

1. Procédé pour l'épuration de gaz chargés de substances polluantes d'après lequel les gaz traversent au moins un bain de mousse aqueux additionné d'un agent moussant et sont alors enfermés au moins en partie, lors du passage par la surface du bain, dans des bulles de mousse et évacués avec celles-ci de la surface du bain, au moins une partie des substances polluantes étant liée, au cours du transport des bulles, à la peau des bulles par sorption, et les bulles de gaz étant liquéfiées, avec entraînement des substances polluantes liées et avec dégagement des gaz épurés au moins en partie, **caractérisé en ce** que les bulles de mousse sortant de la surface du bain de mousse sont poussées contre la surface d'un bain de liquéfaction de mousse monté en aval dans la direction d'écoulement, et ainsi liquéfiées.

2. Procédé selon la revendication 1, caractérisé en ce que les gaz libérés lors de la liquéfaction des bulles de mousse dans le bain de liquéfaction de mousse sont introduits sous la surface d'un autre bain de mousse installé en aval du bain de liquéfaction de mousse et enfermés au moins en partie dans des bulles de mousse lors du passage par une zone de surface du bain de mousse, puis évacués avec lesdites bulles de ladite zone de surface.

3. Procédé selon l'une des revendications 1 ou 2, caractérisé en ce que les gaz chargés de substances polluantes sont introduits par le haut dans le premier bain de mousse.

4. Procédé selon l'une des revendications 1 à 3, caractérisé en ce que les bains de liquéfaction de mousse et les bains de mousse prévus dans la direction d'écoulement en aval du premier bain de mousse, sont alimentés graduellement du haut vers le bas, sous pression, avec les bulles de mousse et respectivement avec les gaz libérés.

5. Procédé selon l'une des revendications 1 à 4, caractérisé en ce que les bulles de mousse sortant du dernier bain de mousse sont poussées contre la surface d'un dernier bain de liquéfaction de mousse et ainsi liquéfiées, et que les gaz alors dégagés sont captés au-dessus de la surface du dernier bain de liquéfaction de mousse et évacués comme courant de gaz perdus.

6. Procédé selon la revendication 5, caractérisé en ce que les bulles de mousse sortant du dernier bain de mousse parcourent au moins une section de condensation comprenant de préférence à chaque fois un bain de liquéfaction de mousse, avant que les bulles de mousse et/ou les gaz libérés parviennent au dernier bain de liquéfaction de mousse.

7. Procédé selon l'une des revendications 1 à 6, caractérisé en ce que le liquide de bain aqueux est soutiré en continu ou de manière discontinue des bains de liquéfaction de mousse et débarrassé des substances polluantes volatiles et/ou solides.

8. Procédé selon la revendication 7, caractérisé en ce que le liquide de bain soutiré des bains de liquéfaction de mousse est dirigé dans un bassin de décantation.

9. Procédé selon l'une des revendications 7 ou 8, caractérisé en ce que les substances polluantes volatiles sont aspirées à la surface du liquide de bain éventuellement chauffé, soutiré des bains de liquéfaction de mousse et/ou de la partie supérieure du bassin de décantation.

10. Procédé selon la revendication 9, caractérisé en ce que les substances polluantes volatiles aspirées sont condensées le long d'une section de refroidissement et captées sous une forme liquide.

11. Procédé selon la revendication 10, caractérisé en ce que l'eau éventuellement entraînée lors de l'aspiration est séparée par congélation le long de la section de refroidissement et dégelée à des intervalles déterminés, par exemple avec de l'air chaud, et renvoyée de préférence dans le circuit de liquide de bain.

12. Procédé selon l'une des revendications 7 à 11, caractérisé en ce que le liquide de bain épuré et soutiré des bains de liquéfaction de mousse ou du bassin de décantation est réintroduit au moins en partie dans les bains de mousse.

13. Procédé selon l'une des revendications 1 à 12, caractérisé en ce que les gaz sont envoyés, avant l'entrée dans le premier bain de mousse, au travers d'un lit filtrant constitué de préférence de copeaux métalliques et qu'ils subissent alors une épuration préliminaire, avec séparation des constituants liquides et/ou solides.

14. Procédé selon la revendication 13, caractérisé en ce que le nettoyage du lit filtrant est effectué par lavage à contre-courant, de préférence avec du liquide de bain, à des intervalles prédéterminés.

15. Dispositif pour l'épuration de gaz chargés de substances polluantes, comprenant au moins un bain de mousse aqueux (22') mélangé avec un agent moussant et pouvant être alimenté en gaz à épurer, avec formation de mousse, et une conduite de gaz perdu (20) installée, dans la direction d'écoulement, en aval du bain de mousse pour l'évacuation des gaz épurés, et destiné à la mise en oeuvre du procédé selon l'une des revendications 1 à 14, **caractérisé en ce** que le bain de mousse (22') est suivi d'un bain de liquéfaction de mousse (36') pour la réception et la liquéfaction des bulles de mousse (76) produites dans ledit bain de mousse (22').

16. Dispositif selon la revendication 15, caractérisé en ce que le bain de liquéfaction de mousse (36') est suivi d'un autre bain de mousse (22') sous la surface duquel peuvent être introduits, avec une nouvelle formation de mousse, les gaz dégagés dans le bain de liquéfaction de mousse (36') lors de la liquéfaction des bulles de mousse (76).

17. Dispositif selon l'une des revendications 15 ou 16, caractérisé en ce que les bains de mousse et de liquéfaction de mousse (22', 36') en communication les uns avec les autres sont disposés les uns au-dessous des autres dans le sens d'écoulement.

18. Dispositif selon l'une des revendications 15 à 17, caractérisé en ce que sous le dernier bain de mousse (22') est disposé un dernier bain de liquéfaction de mousse (40) , et que la conduite de gaz perdus (20) communique avec le volume de gaz (46) situé au-dessus du dernier bain de liquéfaction de mousse (40).

19. Dispositif selon la revendication 18, caractérisé en ce que le dernier bain de mousse (22') communique avec le dernier bain de liquéfaction de mousse (40) par au moins une section de condensation (18) qui comprend de préférence un bain de liquéfaction de mousse (36').

20. Dispositif selon la revendication 19, caractérisé en ce que la section de condensation (18) est constituée par un bain de liquéfaction de mousse (36') et un bain de mousse (22) vide.

21. Dispositif selon l'une des revendications 15 à 20, caractérisé en ce qu'il comprend un circuit d'épuration (50, 52, 54, 56, 57, 58) pour le liquide de bain qui relie les bains de liquéfaction de mousse (36') aux bains de mousse (22').

22. Dispositif selon la revendication 21, caractérisé en ce que le circuit d'épuration comprend un bassin de décantation (40).

23. Dispositif selon l'une des revendications 21 ou 22, caractérisé en ce que le circuit d'épuration comprend un réservoir d'évacuation (52), de préférence chauffant, pour l'aspiration des substances polluantes volatiles.

24. Dispositif selon la revendication 23, caractérisé en ce qu'il comprend une section de refroidissement (62) pour la condensation des substances polluantes volatiles aspirées, qui est raccordée au réservoir d'évacuation (52).

25. Dispositif selon la revendication 24, caractérisé en ce qu'il comprend un système de dégivrage et de recyclage de liquide de bain séparé par congélation, avec formation de givre, dans la section de refroidissement (62).

26. Dispositif selon l'une des revendications 15 à 25, caractérisé en ce qu'un filtre préparatoire (84) est monté en amont du premier bain de mousse (16, 16').

27. Dispositif selon 26, caractérisé en ce que le filtre préparatoire (84) contient comme matière filtrante des copeaux métalliques (90), de préférence des copeaux d'aluminium.

28. Dispositif selon l'une des revendications 26 ou 27, caractérisé en ce que le filtre préparatoire (84) peut être nettoyé par lavage à contre-courant avec du liquide de bain.

29. Dispositif selon l'une des revendications 15 à 28, caractérisé en ce qu'au moins l'un des bains de liquéfaction de mousse (36') communique avec une zone de surface (32) cédant des bulles de mousse du bain de mousse (22) supérieur et, par l'intermédiaire d'un tube capot (24) plongeant sous le niveau de liquide, avec le bain de mousse (22') inférieur.

30. Dispositif selon la revendication 29, caractérisé en ce que le bord inférieur libre du tube capot (24) plongeant dans le bain de mousse (22') est dentelé ou ondulé sur tout le pourtour.

31. Dispositif selon l'une des revendications 15 à 30, caractérisé en ce que, du côté de la conduite de gaz perdus (20), est disposé un épurateur de gaz ou un filtre postérieur pouvant être lavé à contre-courant.

32. Dispositif selon la revendication 31, caractérisé en ce que le filtre postérieur contient comme matière filtrante des copeaux métalliques, de préférence des copeaux d'aluminium.
